# EUROPÄISCHE PATENTANMELDUNG

(11) **EP 1 352 936 A1**
(43) Veröffentlichungstag der Anmeldung: **15.10.2003**
(21) Anmeldenummer: 03008507.0
(22) Anmeldetag: 11.04.2003
(51) Int. Cl.: C09D 183/04, C14C 9/00

(54) **Mehrschichtiger Lackauftrag mit gradierenden Eigenschaften für flexible Substrate**

(30) Priorität: 11.04.2002 DE 10216053
(71) Anmelder: FRAUNHOFER-GESELLSCHAFT ZUR FÖRDERUNG DER ANGEWANDTEN FORSCHUNG E.V., 80636 München (DE)
(72) Erfinder: Amberg-Schwab, Sabine, 79250 Erlabrunn (DE); Weber, Ulrike, 97297 Waldbüttelbrunn (DE)
(74) Vertreter: Olgemöller, Luitgard, Dr.

(57) **Zusammenfassung**

Die Erfindung betrifft ein flexibles Substrat, das mit einer Beschichtung mit gradierenden Eigenschaften versehen ist. Die Beschichtung besteht aus mindestens einer Basisschicht und einer Deckschicht, wobei beide Schichten unter Verwendung von hydrolysierbaren und kondensierbaren Silanen hergestellt wurden und die Basisschicht flexibler ist als die Deckschicht, während die Deckschicht eine größere Abriebfestigkeit aufweist als die Basisschicht. Gegebenenfalls kann die Beschichtung weiterhin eine Zwischenschicht umfassen, deren Eigenschaften zwischen denen der Basisschicht und denen der Deckschicht liegt.

## Beschreibung

Die vorliegende Erfindung betrifft einen mehrschichtigen Lackauftrag für flexible, in der Regel flächige und vorwiegend organische Substrate, und zwar insbesondere für flächige Materialien, die ggf. aus synthetischen, insbesondere aber aus natürlichen, gegebenenfalls chemisch derivatisierten Polymeren bestehen können, beispielsweise Leder, Lederimitate oder natürliche Textilmaterialien wie Cellulose oder Wolle. Weiterhin betrifft die Erfindung ein Verfahren zum Beschichten dieser Substrate. Schließlich betrifft die Erfindung die dementsprechend beschichteten bzw. zugerichteten Materialien selbst.

Leder wird durch Gerbung tierischer Häute hergestellt. Die grundlegenden Schritte umfassen die Nasszurichtung im Walkfass (wässrigem Medium) mit Nachgerbung, Grundfärbung, Fettung und Topfärbung sowie die Endzurichtung, die für Glattleder in Form eines Polymerschichtauftrags erfolgt. Leder besitzt neben einem ansprechenden äußeren Erscheinungsbild viele weitere wertvolle Eigenschaften: angenehmes Tragegefühl durch hohe Wasserdampfdurchlässigkeit und gute haptische Eigenschaften. Deshalb erfreuen sich Lederprodukte wie Bekleidung, Taschen, Möbelleder, etc. einer großen Beliebtheit.

Natürliches Leder ist hydrophil und mechanisch empfindlich. Damit es eine ausreichende Strapazierfähigkeit erhält, muß man es deshalb behandeln. Dies bewirkt man in der Regel durch eine Hydrophobierung oder aber durch das Aufbringen eines deckenden Abschlussfinish. Diese Endzurichtung ist bei Glattledern üblicherweise eine Polymerschicht, die als Schutzschicht das Leder gegen Feuchtigkeit, Verschmutzung und Beschädigung schützen soll; insbesondere werden Polyurethanschichten verwendet, die je nach Verwendungszweck und Einsatzgebiet der Lederprodukte bis zu 50 µm dick sein können. Als Finish für Velourleder dient dagegen ein transparenter Spritzauftrag, z.B. von Silikonen oder Fluorchemikalien. Weitere Ausrüstungsmöglichkeiten sind Imprägnierungen mit Fetten für den Schutz vor mechanischer Verletzung oder Polysiloxanen/ Fluorchemikalien für den Erhalt und die Verbesserung der Wasserdichtigkeit.

Aus der WO 93/22464 A1 ist ein Verfahren zur Hydrophobierung von Materialien faseriger Struktur wie Leder oder Lederaustauschstoffe bekannt, das aus wässriger Flotte appliziert werden kann und die zuvor übliche nachträgliche, das Abwasser belastende Behandlung mit Mineralsalzen überflüssig macht. Gemäß diesem Verfahren wird dem Hydrophobierungsmittel ein Sulfobernsteinsäuremonoester, insbesondere ein Organosilikondi-(monosulfosuccinat) zugesetzt. Fluorhaltige Polykondensate werden gemäß der DE 100 50 642 A1 auf Substrate, darunter modifizierte Naturstoffe oder Leder aufgebracht, um deren Oberflächeneigenschaften, etwa im Hinblick auf mechanische Beständigkeit, Optik oder Antihaftwirkung, vorteilhaft zu modifizieren. Ein Lederpflegemittel, das bereits beim Hersteller auf Lederteile im Auto aufgebracht werden kann, offenbart die DE 195 46 744 A1. Dieses besteht zumindest aus einer anionischen Wachs-Emulsion, nichtionogenen Siloxanen mit Aminogruppen, einer wässrigen Polyurethandispersion sowie Wasser. Die EP 0560506 beschreibt ein Siloxan enthaltendes Schutzmittel für Vinyl und Kautschuk auf Basis eines Alkylarylpolysiloxans, insbesondere für Kraftwagen.

In der WO 96/37631 wird aber auch angesprochen, dass imprägnierte Lederprodukte flexibel bleiben sollten. Dies soll dadurch bewerkstelligt werden, dass ein Harz, insbesondere ein Bismaleimid, zusammen mit einem Härter in einem aprotischen Solvens in die Zwischenräume zwischen den tierischen Fasern des Leders oder dgl. eingebracht, sodann das Solvens abgedampft und schließlich das Harz bei erhöhten Temperaturen und unter Druck gehärtet wird. Mikroporöse Materialien sind allerdings mechanisch nur wenig belastbar. Die DE 198 56 000 A1 beschreibt ein Kondensationsprodukt aus aliphatischen Polyisocyanat-Aminosilan-Addukten und hydrolysierbaren Silanen, das als Lack für die Beschichtung einer Vielzahl von Substraten, darunter Kunststoffe, Holz, Leder und Textilien, geeignet ist und das eine verbesserte Balance zwischen hoher Härte, Abriebfestigkeit sowie Chemikalienbeständigkeit einerseits und hoher Flexibilität andererseits aufweisen soll.

In den deutschen Anmeldungen DE 197 56 906 A1 und DE 198 39 292 A1 werden jeweils Beschichtungsmittel für textile und polymere Materialien beschrieben, die durch hydrolytische Kondensation von u.a. Tetraalkoxysilanen, Di- und/oder Trialkylalkoxysilanen und bestimmten Metallverbindungen erzeugt wurden. Diese eignen sich je nach Zusammensetzung für die Modifizierung des Absorptions- und Reflektionsverhaltens des beschichteten Materials, für ein verbessertes Verschleißverhalten und/oder eine bessere Schmutzabweisung.

Die Anforderungen an die Gebrauchseigenschaften von Leder sind vielfältig, und durch den wachsenden Einsatzbereich steigen sie ständig. Leder sollte kratzunempfindlich sein und außerdem eine hohe Lichtechtheit, wasserabweisende bzw. allgemein hydrophobe und schmutzabweisende Eigenschaften, insbesondere Wasserdichtigkeit bei gleichzeitig ausreichender Wasserdampfaufnahme und -durchlässigkeit, wie man sie bei natürlichem Leder vorfindet, Flexibilität sowie angenehme Griffeigenschaften aufweisen. Gleichzeitig sollte der natürliche Ledercharakter erhalten bleiben.

Leder lässt sich mit gängigen Methoden wie erwähnt zwar durchaus ausreichend abriebfest machen. Allerdings gelingt dies nur, wenn man es mit relativ dicken Polymerschichten ("Endzurichtungen") von etwa 30 µm, teilweise bis zu 50 µm versieht. Diese können dem Leder zwar gleichzeitig eine hohe Hydrophobie verleihen; sie bewirken jedoch einen Rückgang der Wasserdampfdurchlässigkeit und damit eine Beeinträchtigung des Tragekomforts bzw. der haptischen Eigenschaften. Mit den üblichen Lederzurichtungen können also nicht alle gewünschten Gebrauchseigenschaften gleichzeitig erhalten werden. Die gängigen für die Zurichtung verwendeten Polymermaterialien tragen außerdem erheblich zur Entstehung von Emissionen (bzw. Fogging) durch nicht gebundene, chemische Stoffe bei, die insbesondere in geschlossenen Räumen wie im Auto Geruchsbelästigungen, ggf. auch gesundheitliche Probleme verursachen können.

Aufgabe der vorliegenden Erfindung ist es, eine Beschichtung für flexible, vorwiegend organische Substrate wie Leder oder Lederimitate, aber auch für andere, insbesondere flächige und ggf. faserbasierte Materialien aus Polymeren, insbesondere aus Naturstoffen bereitzustellen, mit deren Hilfe die Substrate einerseits abriebfest und vorzugsweise hydrophob gemacht werden können, sie andererseits aber ihre natürliche Wasserdampf-Durchlässigkeit und/oder Wasserdampfaufnahmefähigkeit nicht oder nur unwesentlich verlieren. Wünschenswert ist weiterhin, dass sie kratzunempfindlich, schmutzunempfindlich und ölabweisend gemacht werden, während ihr natürlicher Charakter und ihre natürliche Flexibilität ganz oder weitgehend erhalten bleibt. Auch angenehme Griffeigenschaften sind nach Möglichkeit anzustreben.

Die Lösung dieser Aufgabe gelingt durch die Bereitstellung einer Beschichtung mit gradierenden Eigenschaften. Diese lassen sich dadurch erreichen, dass man auf das Substrat mindestens eine Basisschicht und eine Deckschicht aufbringt, wobei die Basisschicht eine gute Haftung am Substrat und eine an dieses angepasste Flexibilität besitzt, die deutlich höher als die der Deckschicht ist. Die Deckschicht ihrerseits besitzt eine deutlich höhere Abriebbeständigkeit als die Basisschicht; sie wird ggf. hydrophob eingestellt.

Beide Schichten und ggf. auch weitere Schichten werden mit Hilfe von Lacksystemen erzeugt, die Polykondensate hydrolysierbarer und kondensierbarer Silane enthalten oder daraus bestehen. Die gewünschten Wirkungen treten bereits ein, wenn die erfindungsgemäße Beschichtung eine Gesamtdicke von nicht mehr als 10 µm, vorzugsweise von nicht mehr als 4 µm bis 5 µm aufweist. Daraus resultieren ein ausgezeichneter Tragekomfort und ein angenehmer Griff.

Ein geeigneter Basislack lässt sich insbesondere dann erhalten, wenn man bei Auswahl der Ausgangsmaterialen die folgenden Kriterien beachtet. So sollten im Lack Alkyl- oder Alkenylketten vorhanden sein, die eine gewisse Länge nicht unterschreiten. Günstig ist es, Alkylgruppen mit mindestens vier Kohlenstoffatomen vorzusehen; bevorzugt sind Alkylgruppen mit 4 bis 12 Kohlenstoffatomen, stärker bevorzugt mit 6 bis 10 Kohlenstoffatomen, die geradkettig oder verzweigt vorliegen können. Diese Gruppen verbessern die Flexibilität der Schicht. Es ist nachrangig, in welcher Form sie im Lack vorliegen. In einer bevorzugten Ausgestaltung sind sie in Form von Alkylsilanen vorhanden; sie können alternativ oder zusätzlich aber auch als Alkane oder als Alkylreste eines anderen organischen Moleküls vorliegen. Als weiteres notwendiges Kriterium ist zu nennen, dass der Lack für die Basisschicht zwingend eine rein organische Komponente enthalten sollte. Unter "rein organisch" ist dabei zu verstehen, dass die Moleküle dieser Komponente frei sind von Metallen, während sie aber selbstverständlich schwefel- stickstoff- oder phosporhaltige Gruppen u. dgl. aufweisen können. Vorzugsweise enthält darüber hinaus mindestens die oder eine der Ausgangsverbindungen eine organisch polymerisierbare Gruppe. Das kann beispielsweise eine Gruppe sein, die durch elektromagnetische Strahlung, insbesondere UV, oder Wärme vernetzt werden kann. Auf die Art der chemischen Polymerisationsreaktion kommt es erst einmal nicht an; entscheidend ist, dass das Vorhandensein dieser Gruppen eine Aushärtung des Lackes nach dem Aufbringen auf das Substrat ermöglicht. Als Beispiele für einsetzbare Gruppen seien (Meth)Acrylatgruppen oder vorvernetzte Polyurethan-Bausteine genannt. Darüber hinaus ist es besonders wünschenswert, dass sich unter den Ausgangsverbindungen für den Lack Aminoalkylverbindungen befinden. Auch diese können wiederum als Aminoalkylsilane oder gebunden an einen organischen Rest vorliegen. Das Vorhandensein von Aminogruppen im Lack erhöht dessen Polarität und trägt damit zu einer guten Benetzung und Haftung am Substrat bei, insbesondere dann, wenn das Substrat Hydroxygruppen enthält. Das Vorhandensein von Aminogruppen ist daher auch insbesondere dann günstig, wenn die erfindungsgemäße Beschichtung auf Leder oder ein anderes oberflächliche OH-Gruppen tragendes Naturmaterial aufgebracht werden soll. Sind Aminogruppen vorhanden, können diese ggf. auch mit weiteren organischen Komponenten reagieren, beispielsweise mit Acrylatgruppen. Weiterhin ist es sehr empfehlenswert, dass die eingesetzten Silanverbindungen nicht mehr als zwei hydrolysierbare bzw. kondensierbare Gruppen enthalten, dass also nach Möglichkeit keine Trialkoxysilane oder vergleichbare Verbindungen vorhanden sind. Auch Tetraalkoxysilane oder andere Siliciumverbindungen mit vier hydrolysierbaren Gruppen sollten nicht als Ausgangskomponenten in Betracht gezogen werden. Denn diese treiben den Vernetzungsgrad in die Höhe und verursachen damit eine Reduzierung der Flexibilität. Ähnliches gilt für mit Abgangsgruppen wie Alkoholaten komplexierte Metalle, insbesondere solche mit den Wertigkeiten drei und vier.

Unter Berücksichtigung der vorstehenden Überlegungen lässt sich erfindungsgemäß als Basislack insbesondere eine Zusammensetzung einsetzen, die erhältlich ist oder erhalten wurde aus oder unter Verwendung mindestens eines Silans der Formel (I)

RₐR'_{b}SiX_{4-a-b} (I)

worin die Reste und Indices die folgenden Bedeutungen haben:
- R: ist eine Alkyl- oder Alkenylgruppe mit mindestens vier miteinander verbundenen Kohlenstoffatomen,
- R': kann gleich oder verschieden sein und ist ausgewählt unter Resten
R¹ = Alkylgruppe mit mindestens 4 Kohlenstoffatomen,
R² = NR⁴R⁵ mit R⁴ = Wasserstoff oder C₁-C₄-Alkyl und R⁵ = C₁-C₈-Alkylen sowie
R³ = über ein Kohlenstoffatom an das Silicium gebundener, organisch polymerisierbarer Rest,
- X: ist eine Abgangsgruppe, die insbesondere unter hydrolytischen Bedingungen Kondensationsreaktionen unter Ausbildung von Si-O-Si-Gruppen ermöglicht,
- a: bedeutet 0,1 oder 2
- b: bedeutet 1 oder 2 und
- a+b: sind zusammen 1, 2 oder 3, vorzugsweise 2 oder 3,
sowie
mindestens einer organischen, siliciumfreien Verbindung, mit der Maßgabe, dass diese dann, wenn der Lack ohne eine Verbindung der Formel (I) mit einem Rest R¹ hergestellt wird, mindestens vier miteinander verbundene Kohlenstoffatome enthalten muß.

Vorzugsweise ist die organische Verbindung eine solche, die eine oder mehrere organisch polymerisierbare Gruppen enthält. Unter dem Ausdruck "organische Polymerisation" sollen vorliegend nicht nur Polyreaktionen zu verstehen sein, bei denen Doppelbindungen oder Ringe enthaltende Verbindungen in Polymere übergehen. Er soll vielmehr auch, wie im Angloamerikanischen, die Umsetzung sonstiger organischer Gruppen wie Säure-, Amid- oder Thiogruppen unter Ausbildung von Polymeren umfassen.

Vorzugsweise ist die organische Verbindung eine Acrylat-, Methacrylat-, Anhydrid-, Isocyanat-, Amino-, Mercapto- oder Alkohol-Verbindung. Ganz besonders bevorzugt enthält sie darüber hinaus in all diesen Fällen ein Gerüst von mindestens vier miteinander verbundenen Kohlenstoffatomen. Alternativ kann sie auch ein längerkettiges, vorzugsweise unverzweigtes Alkan sein; diese Ausgestaltung ist dann bevorzugt, wenn der Lack ohne eine Verbindung mit der Formel (I) mit einem Rest R³ hergestellt wird.

Die organische Verbindung mit mindestens vier zusammenhängenden Kohlenstoffatomen umfasst vorzugsweise ein Kohlenstoffatom-Gerüst mit 5 bis 25 Kohlenstoffatomen, das linear oder verzweigt sein kann. Sehr gut geeignet hierfür sind Gruppierungen wie Pentaerythritol- oder Trimethylolpropan-Reste, deren Alkoholgruppen teilweise oder ganz verestert sein können, z.B. mit Acrylsäure oder Methacrylsäure. Damit können gleichzeitig auch organisch polymerisierbare Reste in die Mischung zur Bildung des Basislacks eingebracht werden.

Auch im Rest R³ in den Silanen der Formel (I) ist der Ausdruck "organisch polymerisierbar" nicht nur so zu verstehen, dass der genannte Rest Gruppen mit Doppelbindungen oder Ringen umfasst, die Polyreaktionen eingehen können; der Ausdruck soll vielmehr, wie im Angloamerikanischen auch, alle sonstigen organischen Reaktionen beschreiben, mit denen sich Polymere erhalten lassen. Vorzugsweise trägt dieser Rest mindestens eine Acrylat-, Methacrylat-, Anhydrid-, Isocyanat-, Mercaptooder Alkohol-Verbindung; er umfasst auch Reste, die die Bedeutung R² haben.

Vorzugsweise wird der Lack unter Verwendung mindestens einer, stärker bevorzugt von mindestens zwei Verbindungen der Formel (I) mit einem Rest R³, noch stärker bevorzugt mit einem Rest R² hergestellt. Bevorzugt sind auch Mischungen von Silanen der Formel (I), und zwar in der Kombination von Silanen mit einem Rest R¹ und einem Rest R², von Silanen mit einem Rest R¹ und einem Rest R³ sowie von Silanen mit einem Rest R² und einem Rest R³.

In allen Ausgestaltungen ist es bevorzugt, dass der Index a in einem oder allen Silanen der Formel (I) 1 bedeutet. b ist üblicherweise ebenfalls 1. In spezifischen Ausgestaltungen der Erfindungen können jedoch auch Silane eingesetzt werden, in denen b 2 ist. Insbesondere gilt dies für Silane der Formel (I) mit einem oder zwei Resten R¹. Gegebenenfalls sind aber auch andere Kombinationen der Reste R¹, R² und R³ möglich.

R¹ bedeutet besonders bevorzugt n-Butyl, n-Hexyl, n-Octyl oder n-Decyl.

R² bedeutet vorzugsweise ω-Amino-C₁-C₆-Alkyl, insbesondere 3-Aminopropyl, oder N-Methylamino-C₁-C₆-Alkyl, insbesondere N-Methylaminopropyl.

X ist vorzugsweise eine Alkoxygruppe, ganz besonders bevorzugt Methoxy oder Ethoxy.

Bevorzugt ist es außerdem, dass der Basislack unter Verwendung von Silanen hergestellt wird, die insgesamt durchschnittlich nicht mehr als 2,5 Abgangsgruppen X, insbesondere Methoxy- oder Ethoxy-Gruppen, pro Silanmolekül enthalten.

Die Anzahl der Aminogruppen an den Silanen, die für die Herstellung des Lackes eingesetzt werden, wird insbesondere im Hinblick auf das gewählte Substrat und die gewünschten Eigenschaften ausgewählt. Die Anzahl der Aminogruppen kann ggf. relativ hoch sein. So enthält in einer bevorzugten Ausgestaltung der Erfindung jedes für das Harz eingesetzte Silanmolekül durchschnittlich etwa eine Amino- oder Alkylaminogruppe.

Es ist bevorzugt, dass eine oder die organische Verbindung Gruppen enthält, die unter elektromagnetischer Strahlung, insbesondere UV, oder Wärme organisch miteinander polymerisieren und/oder Reaktionen mit organisch polymerisierbaren Gruppen an einem oder dem Silan eingehen können. Damit kann der Lack nach dem Aufbringen auf das Substrat nachgehärtet werden. Bevorzugt handelt es sich hierbei um Acrylatgruppen; diese können beispielsweise mit Resten R² des oder eines Silans oder mit Resten R³ des oder eines Silans, die eine Mercaptogruppe tragen, reagieren. Ganz besonders bevorzugt ist eine Ausgestaltung, in der als organische Verbindung Pentaerythritol-Tetraacrylat eingesetzt wird.

Der Anteil an Silanverbindungen, bezogen auf alle Ausgangsmaterialien des Lacks ohne Berücksichtigung von vorhandenem Lösungsmittel, liegt günstigerweise bei mindestens etwa 20 Gew.-%, vorzugsweise bei mindestens etwa 30 Gew.-% und besonders bevorzugt im Bereich von etwa 40-60 Gew.-%. Der Anteil an organischen Verbindungen (ausgenommen Lösungsmittel) liegt günstigerweise bei höchstens 80 Gew.-%, vorzugsweise bei höchstens 70 Gew.-% und besonders bevorzugt im Bereich von etwa 40-60 Gew.-%.

Ein geeigneter Decklack lässt sich insbesondere dann erhalten, wenn man bei Auswahl der Ausgangsmaterialen die folgenden Kriterien beachtet. Um eine gute Abriebfestigkeit zu erhalten, sollten ein oder mehrere hydrolysierbare und kondensierbare Silane verwendet werden, ggf. in Kombination mit weiteren hydrolysierbaren und kondensierbaren Metallverbindungen, während auf den Zusatz rein organischer Verbindungen (ggf. außer solchen für katalytische Zwecke) jedoch im wesentlichen möglichst zu verzichten ist. Günstig ist es, wenn die hydrolysierbaren und kondensierbaren Silane solche mit mindestens zwei, vorzugsweise mindestens drei Abgangsgruppen sind. Es können auch Silane zugesetzt werden, die ausschließlich solche Abgangsgruppen aufweisen. Die Silane können im übrigen über Kohlenstoff gebundene Reste enthalten, die im wesentlichen inert sind; empfehlenswert ist es aber, dass zumindest ein kleinerer Teil der Silane reaktive Gruppen trägt, um eine organische Vernetzung und/oder eine gute Anbindung an die darunterliegende Schicht bewirken zu können. Hierfür sind insbesondere Aminogruppen geeignet; gegebenenfalls können aber auch Gruppen vorhanden sein, die durch Licht, insbesondere UV, oder Wärme vernetzt werden können. Auf die Art der chemischen Polyreaktion hierbei kommt es nicht an; der Zweck des Vorhandenseins dieser Gruppe ist es, eine Aushärtung des Lackes nach dem Aufbringen auf das Substrat zu ermöglichen. Als Beispiele für einsetzbare Gruppen seien (Meth)Acrylatgruppen oder vorvernetzte Polyurethan-Bausteine genannt. In einer bevorzugten Ausgestaltung der Erfindung werden für die Deckschicht Silane mit Alkylgruppen und/oder Aminoalkylsilane eingesetzt. Günstig ist es, wenn zumindest ein Teil der eingesetzten Silane unpolar ist, um dem Decklack hydrophobe Eigenschaften zu verleihen. Für diesen Zweck sind vor allem Silane mit C₃-C₁₀-Gruppen geeignet, insbesondere solche mit C₃- oder C₄-Gruppen, wie Propylgruppen. Gegebenenfalls können auch fluorhaltige Verbindungen zugegeben werden. Als Abgangsgruppen der Silane eignen sich insbesondere C₁-C₄-Alkoholate; gegebenenfalls können aber auch OH- oder halogensubstituierte Silane zugesetzt sein. Günstig ist auch der Zusatz von mit Abgangsgruppen wie Alkoholaten komplexierten Metallen, insbesondere solcher mit den Wertigkeiten drei und vier.

Unter Berücksichtigung der vorstehenden Überlegungen stellt die Erfindung damit als Decklack insbesondere eine Zusammensetzung bereit, die erhältlich ist oder erhalten wurde unter Verwendung mindestens eines Silans der Formel (II)

R^{x} ₐR^{y} _{b}SiX_{4-a-b}, (II)

worin die Reste und Indiczes die folgenden Bedeutungen haben:
- R^{x}: kann gleich oder verschieden sein und ist eine C₁-C₁₀-Alkyl- oder Alkenylgruppe,
- R^{y}: kann gleich oder verschieden sein und ist ausgewählt unter über ein Kohlenstoffatom an das Silicium gebundenen, organisch polymerisierbaren Resten,
- X: ist eine Abgangsgruppe, die insbesondere unter hydrolytischen Bedingungen Kondensationsreaktionen unter Ausbildung von Si-O-Si-Gruppen ermöglicht,
- a: bedeutet 0, 1 oder 2
- b: bedeutet 0, 1 oder 2 und
- a+b: sind zusammen 1 oder 2,
sowie gegebenenfalls mindestens einer hydrolysierbaren und co-kondensierbaren Metallverbindung der Formel

M(OR)ₓ

worin
- M: ein drei- oder vierwertiges Metall bedeutet, das sich mit Alkoholatgruppen komplexieren lässt,
- OR: eine Alkoholatgruppe, insbesondere Methoxy oder Ethoxy ist, und
- x: im Falle von dreiwertigen Metallen 3 bedeutet und im Falle von vierwertigen Metallen 4 bedeutet,
aber im wesentlichen ohne Einsatz einer rein organischen Verbindung.

M kann insbesondere ausgewählt sein unter Bor, Aluminium, Silicium, Germanium, Zinn, Titan oder Zirkon.

Vorzugsweise ist R^{x} eine Propylgruppe. Bei R^{y} handelt es sich vorzugsweise um eine Aminoalkylgruppe, ganz besonders bevorzugt um Aminopropyl.

X ist vorzugsweise eine C₁-C₄-Alkoxygruppe, ganz besonders bevorzugt Methoxy oder Ethoxy.

Bevorzugt wird der Decklack unter Verwendung von mindestens zwei Silanen der Formel (II) hergestellt, wobei es sich bei dem einen um ein Silan mit einer Alkylgruppe und bei dem anderen um ein Silan mit einer Aminoalkylgruppe handelt. In dieser Ausgestaltung ist X vorzugsweise Methoxy oder Ethoxy.

Wenn der Decklack mit Hilfe eines Aminosilans hergestellt wird, ist in der Regel die Präsenz eines Kondensationskatalysators nicht erforderlich, da die Aminogruppen diese Funktion übernehmen. In anderen Fällen kann dieser natürlich nach Bedarf zugegeben werden. Wird ein Aminosilan eingesetzt, wird der Decklack nach der Applikation vorzugsweise durch Aufbringen von Wärme ausgehärtet. Die Anzahl der Aminogruppen, die für die Herstellung des Lackes eingesetzt werden, ist prinzipiell nicht kritisch. Günstig sind etwa 0,1 bis 0,3 Aminogruppen pro im Lack vorhandenem Siliciumatom.

In einer Ausgestaltung der Erfindung wird der Decklack weiterhin unter Verwendung eines Silans der Formel (II) mit einer Gruppe R^{y} hergestellt, worin R^{y} eine organisch polymerisierbare Gruppe ist, wie voranstehend im Zusammenhang mit den Silanen des Basislacks definiert. In dieser Ausgestaltung kann der Decklack nach dem Aufbringen auf das Substrat, ggf. zusammen oder nach dem Basislack, einer Aushärtung durch organische Polymerisation dieser Gruppen, insbesondere unter Einwirkung von elektromagnetischer Strahlung oder Wärme, unterzogen werden. Gegebenenfalls wird dabei rechtzeitig ein für die organische Vernetzung benötigter oder diese begünstigender Starter oder Katalysator zugesetzt.

In allen Ausgestaltungen kann der Decklack weiterhin unter Verwendung eines Tetralalkoxysilans hergestellt sein.

Insgesamt ist es empfehlenswert, wenn die Gesamtzahl der Abgangsgruppen pro Silanmolekül durchschnittlich nicht unter 2,5, vorzugsweise nicht unter 3,0 liegt.

Gegebenenfalls lassen sich dem Decklack weitere Zusätze beimischen, beispielsweise Füllmittel wie Metalloxide der Formel MₓO_{y}, worin M insbesondere Bor, Aluminium, Silicium, Germanium, Zinn, Titan oder Zirkon bedeutet und x und y die Werte annehmen, die durch die Wertigkeit des Metalls vorgegeben sind.

In einer bevorzugten Ausgestaltung der Erfindung umfasst der Lackauftrag eine Zwischenschicht, die auf die Basisschicht aufgebracht wird und von der Deckschicht abgedeckt wird.

Der Zwischenlack wird in seiner Zusammensetzung so gewählt, dass seine Eigenschaften zwischen denen des Basislacks und denen des Decklacks liegen. Die Zwischenschicht sollte also weniger flexibel als die Basisschicht, aber flexibler als die Deckschicht sein, und sie sollte möglichst eine bessere Abriebbeständigkeit aufweisen als die Basisschicht. Mit einer solchen Schicht wird eine bessere Verträglichkeit zwischen der Basis- und der Deckschicht erreicht.

Für diese Schicht lassen sich daher alle Materialien einsetzen, wie sie voranstehend für den Basislack und den Decklack beschrieben wurden, wobei entweder die durchschnittliche Zahl der hydrolysierbaren Gruppen pro Siliciumatom in den für den Lack vorgesehenen Ausgangsmaterialien höher als im Basislack und/oder niedriger als im Decklack gewählt wird und/oder der Lack mit Hilfe einer geringeren Menge an einer rein organischen Substanz hergestellt wird oder sogar ganz ohne diese, und/oder die durchschnittliche Zahl der Aminogruppen pro Siliciumatom geringer ist als diejenige im Basislack und/oder höher als im Decklack. Als günstig hat sich die Verwendung langkettiger Alkyl- oder Alkenylsilane, vorzugsweise von Trialkoxyalkylsilanen, in Verbindung mit Aminoalkylsilanen, ebenfalls mit drei Alkoxy-Abgangsgruppen, erwiesen.

Zur Herstellung der Beschichtung werden der Basislack, der Decklack sowie ggf. der Zwischenlack jeweils einzeln durch kontrollierte Hydrolyse und Kondensation der hierfür vorgesehenen Silane, ggf. in Gegenwart der vorgesehenen organischen Bestandteile, in einem geeigneten Lösungsmittel hydrolysiert und kondensiert. Als Lösungsmittel eignet sich insbesondere ein Alkohol, ggf. in Mischung mit Wasser. Besonders geeignet sind Mischungen aus Ethanol und Wasser. Die Hydrolyse und Kondensation erfolgt nach gängigen Methoden. Die Lackbildung sollte vorzugsweise so erfolgen, dass eine möglichst große Anzahl an freien SiOH-Gruppen für die sich anschließende Aushärtung zur Verfügung steht; bekanntlich läßt sich dies mit Hilfe von Parametern wie der Stöchiometrie, der Reaktivität der Ausgangssilane, der Syntheseführung und dem Feststoffgehalt steuern. Nach Abschluss der Hydrolysereaktion wird der Feststoffgehalt durch Zugabe oder Entnahme von Lösungsmittel, z.B. durch Einrotieren oder Abdampfen von Lösungsmittel oder durch Verdünnen, in geeigneter Weise eingestellt, vorzugsweise auf ca. 15 bis 45 Gew.-%, und ganz bevorzugt auf etwa 25 bis 35 Gew.-%. Abweichungen in Abhängigkeit vom gewählten Substrat sind natürlich möglich. Die Lackschichten werden nacheinander in geeigneter Weise appliziert, beispielsweise durch Sprühapplikation; nach jeder Applikation gibt man dem Lösungsmittel die Möglichkeit, abzudampfen, was durch Zusatz von Wärme oder dergleichen unterstützt werden kann. Günstig ist eine thermische Zwischenhärtung vor Aufbringen des Decklackes oder einer Zwischenschicht. Sofern der Lack organisch vernetzbare Gruppen enthält, können diese im Anschluss daran oder gleichzeitig einer Vernetzung unterworfen werden; man kann die Vernetzung aber auch erst nach Abschluss des Auftrags aller Schichten bewirken. Für die organische Vernetzung ggf. benötigte Starter, Katalysatoren oder Beschleuniger können den jeweiligen Zusammensetzungen bei Herstellung der Lacke zugegeben werden. Eine thermische Nachhärtung kann nach Aufbringen des Decklacks erfolgen.

Der Lack wird vorzugsweise in einer Dicke aufgetragen, dass nach Abdampfen des/der Lösungsmittel(s) und nach Aushärten jede Schicht nicht mehr als etwa 4-5 µm dick ist und die Gesamtbeschichtung eine Dicke von nicht mehr als etwa 10 µm, vorzugsweise 4-5 µm erreicht.

Nachstehend soll die Erfindung anhand eines Beispiels näher erläutert werden.

### Synthese zu Schicht 1: Grundierung

Zusammensetzung des Lackes:
Pentaerythritol Tetraacrylat (Sartomer SR 295)
3-Aminopropyl-methyl-diethoxysilan (Dialk-AMEO),
N-Methylaminopropyltrimethoxysilan (N-MeAMMO),
Triethylamin
Zugesetzte Lösemittel: Ethanol und Wasser, Feststoffgehalt 30 %

| Nr. | Molmenge | Edukt | Molekulargewicht | Menge [g] |
|---|---|---|---|---|
| 1 | 200 mmol | SR 295 | (352.34g/mol) | 70,47 |
| 2 | | Ethanol | | 1000 |
| 3 | 100 mmol | Dialk-AMEO | (191,32g/mol) | 19,13 |
| 4 | 70 mmol | N-MeAMMO | (193,32g/mol) | 13,53 |
| 5 | 500 mmol | Wasser | (18,0g/mol) | 9,0 |
| 6 | 100 mmol | Triethylamin | (101,19g/mol) | 10,2g |
| Summe: 1122,33g | | | | |

### SYNTHESE:

SR 295 wird in Ethanol gelöst. Die Komponenten (3) und (4) werden zusammengewogen und zu der Lösung aus (1) und (2) hinzugetropft; die Lösung ist farblos klar. Man lässt die Lösung fünf Stunden rühren. Anschließend wird eine Lösung aus den Komponenten (5) und (6) hinzugegeben. Man lässt weitere acht Stunden rühren. Der Lack wird anschließend filtriert. Er hat einen Feststoffgehalt von 12,34 %. Zur Anwendung auf Leder wird er auf einen Feststoffgehalt von 30 % einrotiert.
Es erfolgt die Zugabe von 1% Trigonox 21.

### APPLIKATION:

Der Lack wird durch Sprühapplikation aufgetragen, die Zwischenhärtung erfolgt thermisch bei 50°C, 30 Minuten. Die Aushärtezeit kann durch Erhöhung der Temperatur bzw. durch IR-Trocknung verkürzt werden und liegt dann im Sekundenbereich.

### Synthese zu Schicht 2: Mittelschicht

Zusammensetzung des Lackes:
3-Aminopropyltriethoxysilan (AMEO),
Octyltriethoxysilan (OTEO),
Zugesetzte Lösemittel: Ethanol und Wasser, Feststoffgehalt 20%

| Nr. | Molmenge | Edukt | Molekulargewicht | Menge [g] |
|---|---|---|---|---|
| 1 | | Ethanol | | 7,12 |
| 2 | 0,0644 | AMEO | 221,37 | 14,25 |
| 3 | 0,0644 | OTEO | 276,48 | 17,80 |
| 4 | 0,19 | Wasser (Zugabe als 0,1n HCl) | 18 | 3,46 |
| Summe: 42,63 | | | | |

### SYNTHESE:

AMEO wird vorgelegt, Ethanol wird zugegeben. Es entsteht eine farblose, klare Lösung. Dann wird OTEO hinzugegeben. Die Lösung bleibt klar. Anschließend wird die 0,1 n HCI zugegeben, die zunächst getrübte Lösung wird nach 3-stündigem Refluxieren klar. Der Feststoffgehalt des Lackes liegt bei 34,7 %; der Lack wird zur Verarbeitung auf einen Feststoffgehalt von 20 % durch Verdünnen mit Ethanol eingestellt.

### APPLIKATION:

Der Lack wird durch Sprühapplikation aufgetragen, die Zwischenhärtung erfolgt thermisch bei 50°C, 30 Minuten. Die Aushärtezeit kann durch Erhöhung der Temperatur bzw. durch IR-Trocknung verkürzt werden und liegt dann im Sekundenbereich.

### Synthese zu Schicht 3: Topcoat

Zusammensetzung des Lackes:
3-Aminopropyltriethoxysilan (AMEO),
Propyltrimethoxysilan (PTMO),
Zugesetzte Lösemittel: Ethanol und Wasser, Feststoffgehalt 30%

| Nr | Mol Menge | Edukt | Molekulargewicht | Menge in [g] |
|---|---|---|---|---|
| 1 | | Ethanol | | 20 |
| 2 | 0,18068 | AMEO | 221,37 | 40 |
| 3 | 0,36138 | PTMO | 164,28 | 59,36 |
| 4 | 0,813 | Wasser (Zugabe als 0,1n HCl) | 18,02 | 14,79 |
| Summe: 134,15g | | | | |

### SYNTHESE:

Die Komponenten (1) und (2) werden zusammengewogen. Komponente (3) wird hinzugegeben. Anschließend wird drei Std. bei Raumtemperatur gerührt.
Der Lack hat einen Feststoffgehalt von ca. 40 %. Durch weitere Zugabe von Ethanol wird ein Feststoffgehalt von 30 % eingestellt.

### APPLIKATION:

Der Lack wird durch Sprühapplikation aufgetragen, die Endhärtung erfolgt thermisch bei 120 °C, 120 Minuten. Die Aushärtezeit kann durch Erhöhung der Temperatur bzw. durch IR-Trocknung verkürzt werden und liegt dann im Sekundenbereich.

**Tabelle 1:**

| Vergleich einer üblichen Lederzurichtung des Standes der Technik (Polyurethan, Schichtdicke: ca. 30 µm) mit einer Lederbeschichtung gemäß Beispiel (Schichtdicke 4 µm). | | | |
|---|---|---|---|
| **Prüfparameter** | **Stand der. Technik** | **Beispiel** | **Anforderung** |
| **Haftfestigkeit** | | | > 1,5 (Möbel) |
| (IUF 470) [N/cm] | > 4,0 | **9,0** | > 4,0 (Auto) |
| **Reibechtheit der Oberseite** (DIN EN ISO 11640) | | | |
| **Filz trocken:** 500 Reibtouren | 4 | **5** | > 4 |
| **Filz nass:** 80 Reibtouren | 4 | **5** | > 4 |
| **Filz pH 8,0:** 50 Reibtouren **Graumaßstab Note 5-1*** | 4 | **5** | > 4 |
| **Verschleißverhalten** (in Anlehnung an DIN 53109) Anzahl Reibzyklen mit Reibrad CS 10 und 10 N Belastung | nach 10-20 Zyklen deutlicher Abrieb erkennbar (Möbel-leder) | **erst nach 60 Zyklen leichter Abrieb erkennbar** | Keine Schädigung der Oberfläche nach 500 Zyklen (nur für Autoleder) |
| **Wassertropfenechtheit** (IUF 420) | | | |
| **Eindringzeit [min]** | 10-15 | **36** | > 10 |
| **Farbänderung** | 4-5 | **5** | 5 |
| **Wasserdampfdurchlässigkeit** | | | |
| (DIN 53333) | 0,8 - 1,5 | **9** | > 1,5 (Auto) |
| [mg/cm² h] | | | 2,0 (Möbel) |
| **Wasserdampfaufnahme** | | | |
| (DIN EN 344) [mg/cm²] in 8 h | 4,6 -5,8 | **21** | 8,0 (Möbel) |
| **Emission** (VDA 277)[µgC/g] | 300-1000 | **113-223** | < 100 |
| **Fogging** (VDA 75201) [mg/50 cm²] | 5-10 | **3-4** | < 5 (Auto) |
| **Wärmebeständigkeit** (TL 52064) | > 3-4 | **> 3-4** | > 3-4 (Auto) |
| **Graumaßstab Note 5-1** | | | |
| **Lichtechtheit** (DIN 54004) | 5-6 | **5-6** | 5 |
| **Blaumaßstab Note 6-1 **** | | | |

| | | | |
|---|---|---|---|
| * 5 (beste Note) - 1 (schlechteste Note) | | | |
| ** 6 (beste Note) - 1 (schlechteste Note) | | | |

## Patentansprüche

1. Flexibles Substrat, das mit einer Beschichtung mit gradierenden Eigenschaften versehen ist, **dadurch gekennzeichnet**, das die Beschichtung aus mindestens einer Basisschicht und einer Deckschicht besteht, wobei beide Schichten unter Verwendung von hydrolysierbaren und kondensierbaren Silanen hergestellt wurden und die Basisschicht flexibler ist als die Deckschicht, während die Deckschicht eine größere Abriebfestigkeit aufweist als die Basisschicht.

2. Flexibles Substrat nach Anspruch 1, **dadurch gekennzeichnet, dass** die Basisschicht erzeugt wurde unter Verwendung mindestens eines Silans der Formel (I)
RₐR'_{b}SiX_{4-a-b} (I)
worin die Reste und Indices die folgenden Bedeutungen haben:
R ist eine Alkyl- oder Alkenylgruppe mit mindestens vier miteinander verbundenen Kohlenstoffatomen,
R' kann gleich oder verschieden sein und ist ausgewählt unter Resten
R¹ = Alkylgruppe mit mindestens 4 Kohlenstoffatomen,
R² = NR⁴R⁵ mit R⁴ = Wasserstoff oder C₁-C₄-Alkyl und R⁵ = C₁-C₈-Alkylen sowie
R³ = über ein Kohlenstoffatom an das Silicium gebundener, organisch polymerisierbarer Rest,
X ist eine Abgangsgruppe, die insbesondere unter hydrolytischen Bedingungen Kondensationsreaktionen unter Ausbildung von Si-O-Si-Gruppen ermöglicht,
a bedeutet 0,1 oder 2
b bedeutet 1 oder 2 und
a+b sind zusammen 1, 2 oder 3,
sowie
mindestens einer organischen, siliciumfreien Verbindung, mit der Maßgabe, dass diese dann, wenn der Lack ohne eine Verbindung der Formel (I) mit einem Rest R¹ hergestellt wird, mindestens vier miteinander verbundene Kohlenstoffatome enthalten muss.

3. Flexibles Substrat nach Anspruch 2, **dadurch gekennzeichnet, dass** die Basisschicht erzeugt wurde unter Verwendung eines oder mehrerer Silane der Formel (III)
RₐR² _{b}SiX_{4-a-b}, (III)
worin R² die für Formel (I) in Anspruch 2 angegebene Bedeutung besitzt,
sowie
mindestens einer organischen, siliciumfreien Verbindung, die mindestens vier miteinander verbundene Kohlenstoffatome und mindestens eine, vorzugsweise mehr als eine organisch polymerisierbare Gruppe aufweist.

4. Flexibles Substrat nach Anspruch 2 oder 3, **dadurch gekennzeichnet, dass** die Basisschicht ohne Verwendung von Silanen der Formel SiX₄, worin X dieselbe Bedeutung wie in Anspruch 2 für Formel (I) angegeben besitzt, vorzugsweise auch ohne Verwendung von Silanen der Formel (I), in denen a+b zusammen 1 ist, erzeugt wurde.

5. Flexibles Substrat nach Anspruch 3 oder 4, **dadurch gekennzeichnet, dass** die organisch polymerisierbare Gruppe(n) Acrylat oder Methacrylat ist/sind.

6. Flexibles Substrat nach Anspruch 5, **dadurch gekennzeichnet, dass** die Basisschicht erzeugt wurde durch hydrolytische Kondensation von Pentaerythritol-tetraacrylat, 3-Aminopropyl-methyl-diethoxysilan und N-Methylaminopropyltrimethoxysilan in Gegenwart von Triethylamin, Ethanol und Wasser, durch Applikation der resultierenden Mischung und durch Härtung der applizierten Mischung.

7. Flexibles Substrat nach einem der voranstehenden Ansprüche, **dadurch gekennzeichnet, dass** die Deckschicht erzeugt wurde unter Verwendung mindest eines Silans der Formel (II)
R^{x} ₐR^{y} _{b}SiX4_{-a-b}, (II)
worin die Reste und Indices die folgenden Bedeutungen haben:
R^{x} kann gleich oder verschieden sein und ist eine C₁-C₁₀-Alkyl- oder Alkenylgruppe,
R^{y} kann gleich oder verschieden sein und ist ausgewählt unter über ein Kohlenstoffatom an das Silicium gebundenen, organisch polymerisierbaren Resten,
X ist eine Abgangsgruppe, die insbesondere unter hydrolytischen Bedingungen Kondensationsreaktionen unter Ausbildung von Si-O-Si-Gruppen ermöglicht,
a bedeutet 0, 1 oder 2
b bedeutet 0, 1 oder 2 und
a+b sind zusammen 1 oder 2,
sowie gegebenenfalls mindestens einer hydrolysierbaren und co-kondensierbaren Metallverbindung der Formel
M(OR)ₓ
worin
M ein drei- oder vierwertiges Metall bedeutet, das sich mit Alkoholatgruppen komplexieren lässt,
OR eine Alkoholatgruppe, insbesondere Methoxy oder Ethoxy ist, und
x im Falle von dreiwertigen Metallen 3 bedeutet und im Falle von vierwertigen Metallen 4 bedeutet,
im wesentlichen ohne Einsatz einer rein organischen Verbindung.

8. Flexibles Substrat nach Anspruch 7, **dadurch gekennzeichnet, dass** die Deckschicht erzeugt wurde unter Verwendung mindestens einer Verbindung der Formel (II), in der a=0 und b=1 oder a=1 und b=0 ist.

9. Flexibles Substrat nach Anspruch 8, **dadurch gekennzeichnet, dass** die Deckschicht erzeugt wurde unter Verwendung mindestens einer Verbindung der Formel (II) mit a=1 und b=0 sowie einer weiteren Verbindung der Formel (II) mit a=0 und b=1, wobei R^{y} eine primäre oder sekundäre Aminoalkylgruppe ist.

10. Flexibles Substrat nach Anspruch 9, **dadurch gekennzeichnet, dass** die Deckschicht erzeugt wurde durch hydrolytische Kondensation von 3-Aminopropyltriethoxysilan und Propyltrimethoxysilan in Gegenwart von Ethanol und Wasser, durch Applikation der resultierenden Mischung und durch Härtung der applizierten Mischung.

11. Flexibles Substrat nach einem der voranstehenden Ansprüche, **dadurch gekennzeichnet, dass** die Deckschicht erzeugt wurde unter Zugabe eines oder mehrerer Fluorsilane.

12. Flexibles Substrat nach einem der voranstehenden Ansprüche, **dadurch gekennzeichnet, dass** die Beschichtung weiterhin eine Zwischenschicht aufweist, deren Flexibilität höher ist als die der Deckschicht und/oder geringer ist als die der Basisschicht und/oder deren Abriebfestigkeit geringer ist als die der Deckschicht und/oder höher ist als die der Basisschicht.

13. Flexibles Substrat nach Anspruch 12, **dadurch gekennzeichnet, dass** die Zwischenschicht erzeugt wurde unter Verwendung mindestens eines Silans der Formel (IV)
R^{z} ₐSiX₄₋ₐ (IV)
Worin der Rest R^{z} gleich oder verschieden sein kann und eine geradkettige oder verzweigte C₄- bis C₁₂-Alkyl- oder -Alkenylgruppe ist oder die Bedeutung von R² wie in Anspruch 2 für Formel (I) definiert besitzt und a=1 oder 2 ist.

14. Flexibles Substrat nach Anspruch 13, **dadurch gekennzeichnet, dass** die Zwischenschicht erzeugt wurde durch hydrolytische Kondensation von 3-Aminopropyltriethoxysilan und Octyltriethoxysilan in Anwesenheit von Wasser und Ethanol, durch Applikation der resultierenden Mischung und durch Härtung der applizierten Mischung.

15. Flexibles Substrat nach einem der voranstehenden Ansprüche, **dadurch gekennzeichnet, dass** das Substrat Leder oder ein textiles Flächengebilde vorzugsweise aus Cellulose und/oder Wolle ist.

16. Flexibles Substrat nach einem der voranstehenden Ansprüche, **dadurch gekennzeichnet, dass** die Beschichtung eine Dicke von nicht mehr als 10µm, vorzugsweise im Bereich 4 bis 5µm aufweist.

17. Verfahren zum Beschichten eines flexiblen Substrats mit einer Beschichtung, die auf der dem flexiblen Substrat zugewandten Seite flexibler ist als auf der dem flexiblen Substrat abgewandten Seite und die auf der dem flexiblen Substrat abgewandten Seite abriebbeständiger ist als auf der dem flexiblen Substrat zugewanden Seite, umfassend die Schritte:
- Aufbringen eines Basislacks auf das flexible Substrat, der erhalten wurde durch hydrolytische Kondensation mindestens eines Silans der Formel (I) worin die Reste und Indices die folgenden Bedeutungen haben:
RₐR'_{b}SiX_{4-a-b}, (I)
R ist eine Alkyl- oder Alkenylgruppe mit mindestens vier miteinander verbundenen Kohlenstoffatomen,
R' kann gleich oder verschieden sein und ist ausgewählt unter Resten
R¹ = Alkylgruppe mit mindestens 4 Kohlenstoffatomen,
R² = NR⁴R⁵ mit R⁴ = Wasserstoff oder C₁-C₄-Alkyl und R⁵ = C₁-C₈-Alkylen sowie
R³ = über ein Kohlenstoffatom an das Silicium gebundener, organisch polymerisierbarer Rest,
X ist eine Abgangsgruppe, die insbesondere unter hydrolytischen Bedingungen Kondensationsreaktionen unter Ausbildung von Si-O-Si-Gruppen ermöglicht,
a bedeutet 0,1 oder 2
b bedeutet 1 oder 2 und
a+b sind zusammen 1, 2 oder 3,
in Gegenwart mindestens einer organischen, siliciumfreien Verbindung, mit der Maßgabe, dass diese dann, wenn der Lack ohne eine Verbindung der Formel (I) mit einem Rest R¹ hergestellt wird, mindestens vier miteinander verbundene Kohlenstoffatome enthalten muss, und
- Aufbringen eines Decklacks, der den Basislack überdeckt, und der erhalten wurde durch hydrolytische Kondensation mindestens eines Silans der Formel (II)
R^{x} ₐR^{y} _{b}SiX4_{-a-b}, (II)
worin die Reste und Indices die folgenden Bedeutungen haben:
R^{x} kann gleich oder verschieden sein und ist eine C₁-C₁₀-Alkyl- oder Alkenylgruppe,
R^{y} kann gleich oder verschieden sein und ist ausgewählt unter über ein Kohlenstoffatom an das Silicium gebundenen, organisch polymerisierbaren Resten,
X ist eine Abgangsgruppe, die insbesondere unter hydrolytischen Bedingungen Kondensationsreaktionen unter Ausbildung von Si-O-Si-Gruppen ermöglicht,
a bedeutet 0, 1 oder 2
b bedeutet 0, 1 oder 2 und
a+b sind zusammen 1 oder 2,
sowie gegebenenfalls mindestens einer hydrolysierbaren und co-kondensierbaren Metallverbindung der Formel
M(OR)ₓ
worin
M ein drei- oder vierwertiges Metall bedeutet, das sich mit Alkoholatgruppen komplexieren lässt,
OR eine Alkoholatgruppe, insbesondere Methoxy oder Ethoxy ist, und
x im Falle von dreiwertigen Metallen 3 bedeutet und im Falle von vierwertigen Metallen 4 bedeutet,
im wesentlichen ohne Einsatz einer rein organischen Verbindung, und Trocknen und/oder Härten des Basis- und des Decklacks jeweils nach dessen Aufbringen oder aber erst nach Aufbringen des Decklacks, wobei die genannte Beschichtung gebildet wird.

18. Verfahren nach Anspruch 17, **dadurch gekennzeichnet, dass** man nach dem Aufbringen des Basislacks und vor dem Aufbringen des Decklacks einen Zwischenlack aufbringt, dessen Flexibilität nach dem Trocknen oder Härten höher ist als die der Deckschicht und/oder geringer als die der Basisschicht und/oder dessen Abriebfestigkeit nach dem Trocknen oder Härten geringer ist als die der Deckschicht und/oder höher ist als die der Basisschicht.

19. Verfahren nach Anspruch 18, **dadurch gekennzeichnet, dass** der Decklack erzeugt wurde durch hydrolytische Kondensation mindestens eines Silans der Formel (IV)
R^{z} ₐSiX₄₋ₐ (IV)
worin der Rest R^{z} gleich oder verschieden sein kann und eine geradkettige oder verzweigte C₄- bis C₁₂-Alkyl- oder -Alkenylgruppe ist oder die Bedeutung von R² wie in Anspruch 2 für Formel (I) definiert besitzt und a=1 oder 2 ist.

20. Verfahren nach Anspruch 17, **dadurch gekennzeichnet, dass** der Basislack erhalten wurde durch hydrolytische Kondensation von Pentaerythritol-tetraacrylat, 3-Aminopropyl-methyl-diethoxysilan und N-Methaylaminopropyltrimethoxysilan in Gegenwart von Triethylamin, Ethanol und Wasser,
und dass der Decklack erhalten wurde durch hydrolytische Kondensation von 3-Aminopropyl-methyl-diethoxysilan und N-Methylaminopropyltrimethoxysilan in Gegenwart von Triethylamin, Ethanol und Wasser.

21. Verfahren nach Anspruch 19 und Anspruch 20, **dadurch gekennzeichnet, dass** der Zwischenlack erhalten wurde durch hydrolytische Kondensation von 3-Aminopropyltriethoxysilan und Octyltriethoxysilan in Anwesenheit von Wasser und Ethanol, und dass man den Zwischenlack härtet.

22. Verfahren nach einem der Ansprüche 17 bis 21, **dadurch gekennzeichnet, dass** man zur Hydrophobierung dem Decklack vor, während oder nach der hydrolytischen Kondensation ein oder mehrere Fluorsilane zusetzt.

23. Verfahren nach einem der Ansprüche 17 bis 22, **dadurch gekennzeichnet, dass** der Basislack und/oder der Decklack nach dem Aufbringen thermisch gehärtet werden.

24. Kit, umfassend einen Basislack, der erhalten wurde durch hydrolytische Kondensation mindestens eines Silans der Formel (I)
RₐR'_{b}SiX_{4-a-b}, (I)
worin die Reste und Indices die folgenden Bedeutungen haben:
R ist eine Alkyl- oder Akenylgruppe mit mindestens vier miteinander verbundenen Kohlenstoffatomen,
R' kann gleich oder verschieden sein und ist ausgewählt unter Resten
R¹ = Alkylgruppe mit mindestens 4 Kohlenstoffatomen,
R² = NR⁴R⁵ mit R⁴ = Wasserstoff oder C₁-C₄-Alkyl und R⁵ = C₁-C₈-Alkylen sowie
R³ = über ein Kohlenstoffatom an das Silicium gebundener, organisch polymerisierbarer Rest,
X ist eine Abgangsgruppe, die insbesondere unter hydrolytischen Bedingungen Kondensationsreaktionen unter Ausbildung von Si-O-Si-Gruppen ermöglicht,
a bedeutet 0,1 oder 2
b bedeutet 1 oder 2 und
a+b sind zusammen 1, 2 oder 3,
in Gegenwart mindestens einer organischen, siliciumfreien Verbindung, mit der Maßgabe, dass diese dann, wenn der Lack ohne eine Verbindung der Formel (I) mit einem Rest R¹ hergestellt wird, mindestens vier miteinander verbundene Kohlenstoffatome enthalten muss,
sowie einen Decklack, der erhalten wurde durch hydrolytische Kondensation mindestens eines Silans der Formel (II)
R^{x} ₐR^{y} _{b}SiX4_{-a-b}, (II)
worin die Reste und Indices die folgenden Bedeutungen haben:
R^{x} kann gleich oder verschieden sein und ist eine C₁-C₁₀-Alkyl- oder Alkenylgruppe,
R^{y} kann gleich oder verschieden sein und ist ausgewählt unter über ein Kohlenstoffatom an das Silicium gebundenen, organisch polymerisierbaren Resten,
X ist eine Abgangsgruppe, die insbesondere unter hydrolytischen Bedingungen Kondensationsreaktionen unter Ausbildung von Si-O-Si-Gruppen ermöglicht,
a bedeutet 0, 1 oder 2
b bedeutet 0, 1 oder 2 und
a+b sind zusammen 1 oder 2,
sowie gegebenenfalls mindestens einer hydrolysierbaren und co-kondensierbaren Metallverbindung der Formel
M(OR)ₓ
worin
M ein drei- oder vierwertiges Metall bedeutet, das sich mit Alkoholatgruppen komplexieren lässt,
OR eine Alkoholatgruppe, insbesondere Methoxy oder Ethoxy ist, und
x im Falle von dreiwertigen Metallen 3 bedeutet und im Falle von vierwertigen Metallen 4 bedeutet,
im wesentlichen ohne Einsatz einer rein organischen Verbindung.

25. Kit nach Anspruch 24, umfassend weiterhin einen Zwischenlack, der erzeugt wurde durch hydrolytische Kondensation mindestens eines Silans der Formel (IV)
R^{z} ₐSiX₄₋ₐ (IV)
worin der Rest R^{z} gleich oder verschieden sein kann und eine geradkettige oder verzweigte C₄- bis C₁₂-Alkyl- oder -Alkenylgruppe ist oder die Bedeutung von R² wie in Anspruch 2 für Formel (I) definiert besitzt und a=1 oder 2 ist.
